# EUROPEAN PATENT APPLICATION

(11) **EP 0 539 000 A1**
(43) Date of publication of application: **28.04.1993**
(21) Application number: 92307701.0
(22) Date of filing: 24.08.1992
(51) Int. Cl.: B64D 37/20, F02C 7/236, F02M 37/18

(54) **Pelton wheel turbine**

(30) Priority: 17.10.1991 GB 9122062; 14.01.1992 GB 9200717
(71) Applicant: GEC AEROSPACE LIMITED, Titchfield, Hampshire PO14 4QA (GB)
(72) Inventor: Taylor, Peter John, Fareham, Hampshire PO14 4RE (GB); Black, Nicholas, Southampton, Hampshire S03 6XS (GB)
(74) Representative: Cockayne, Gillian

(57) **Abstract**

A pelton wheel turbine (5) powering an inducer (4) below fuel level (3) in a fuel tank is kept unflooded by air extracted from the fuel by a booster pump.

## Description

This invention relates to a pelton wheel turbine, and in particular to a pelton wheel turbine used to power a turbo-pump in an aircraft fuel system.

Civil Aircraft use booster fuel pumps remotely mounted for ease of maintenance. Due to their position they require a long tube from the pump to the low point of the fuel tank allowing fuel to enter into the booster pump, this arrangement is known as a remote inlet pump. To achieve the necessary lift and to prime the pump on starting, these pumps are fitted with a liquid ring pump. The liquid ring pump is sized firstly to achieve the desired priming time and secondly to assist the booster pump when air or vapour is released from the fuel along the inlet tube.

Aviation fuel will always include some dissolved air, when the fuel is at a pressure below that at which the air was dissolved into the fuel the air is released.

A problem encountered with remote inlet pumps is that the pressure drop within the tube when the aircraft is at altitude can easily be so great that air is released from the fuel. This can result in the remote inlet pump receiving large quantities of air and in extreme cases an almost pure flow of air and virtually no fuel.

As a result remote inlet pumps will normally have restricted altitude ability due to the air released from the inlet tube and also due to the fuel boiling caused by the lift and friction losses in the inlet tube.

In order to overcome this problem it has been proposed that inducer pumps situated at the inlet end of the inlet tube could be used to reduce the pressure drop within the inlet tube. However it is difficult to safely power such inducer pumps because they are situated at or near the bottom of an aircraft fuel tank. The best solution is to drive the inducer pump from a pelton wheel turbine powered by pressurised fuel from the remote inlet pump, however this produces the problem that the pelton wheel must operate flooded, that is immersed in fuel, and as a result its efficiency is very low.

It is the objective of this invention to overcome this problem at least in part.

This invention provides a pelton wheel turbine immersed in fuel and characterised by the turbine being surrounded by an enclosure containing gas such that the pelton wheel turbine is unflooded, the gas being supplied from a pump which extracts it from the fuel.

Where a remote inlet pump is assisted by a liquid ring pump the liquid ring pump pumps air only, in order to prime the remote inlet pump on starting and to remove air and vapour released in the inlet tube. Due to the requirement for aircraft pumps to be of minimum size they operate at high speed, in the case of remote inlet booster pumps normally around 12000 rpm. Running at this speed the inlet of the pump is small and the pressure drop across it is such that dissolved air is always released from the fuel on passing through the inlet of the pump even if it is not released in the remote inlet tube, for example because the aircraft is still at a relatively low altitude. At present the air from the liquid ring pump is passed back into the fuel tank from which it has been pumped because although generally referred to as air it is in fact a very high foam of fuel and air but can be treated generally as if it were air.

It is possible to overcome the problems of boiling fuel and vapour and air released from fuel by using inducer pumps. In overcoming vapour release it is necessary to have an inducer pump positioned at the entry of the remote inlet tube at the low point of the fuel tanks. Since the diameter of the remote inlet tube and the lift and friction losses are established as is the required pressure boost to assist the booster pump to provide its output with minimal deterioration the necessary design of the inducer pump is easily decided upon, as is the rotational speed of the inducer pump.

Once the specific rotational speed of the inducer pump has been established the required rotational speed of the motive device providing the speed and torque needed to drive the inducer pump is also established.

In general the specific speed required has demanded the use of positive displacement motors or pelton wheels driven by pressurized fuel from the output of the booster pumps to drive the inducer as a turbo-pump. Unfortunately, positive displacement motors require much higher pressures than those available from booster pumps to drive them and so require additional pumps to increase their driving fuel pressure, while pelton wheel turbines have a very low efficiency when running flooded, which they have to do because the inducer is at the input end of the remote inlet tube and so is immersed in the fuel, so the majority of the fuel pumped by the remote inlet booster pump must be used to drive the inducer pump. This produces a vicious circle where the increase in fuel flow needed to drive an inducer pump increases the pressure drop in the inlet tube and so produces a need for a larger inducer pump requiring even more of the fuel flow to drive it. This has made previous turbo-pumps for this task very large and inefficient. However it has been realised that with the liquid ring pump of the booster pump producing large quantities of air released from the fuel the air produced can be supplied to the top of the pelton wheel enclosure to keep the pelton wheel relatively dry even though it is immersed under the fuel. In this manner a pelton wheel turbine pump for use as an inducer can be manufactured having a much higher efficiency than before, allowing turbo-pumps to be made much smaller and demanding a smaller proportion of the fuel pumped to drive them than in the past.

Typically the efficiency of a pelton wheel turbine can be up to 70% when running dry but only 2% when running flooded.

A pelton wheel turbine employing the invention is shown by way of example only with reference to the accompanying diagrammatic drawing, in which:

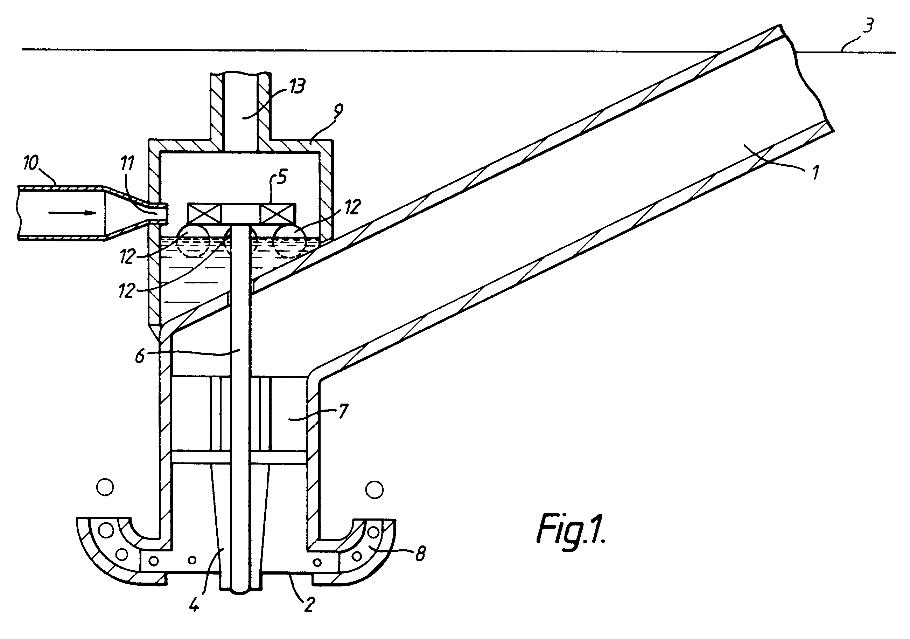

Figure 1 shows a pelton wheel powered inducer embodying the invention in cross-section.

Referring to Figure 1 a remote inlet tube 1 has an inlet opening 2 below the level of fuel 3 in a fuel tank. The remote inlet tube 1 supplies fuel to a booster fuel pump (not shown) in an aircraft fuel system.

At the inlet opening 2 an inducer pump 4 is provided driven by a pelton wheel turbine 5 by way of a shaft 6 linking the pelton wheel turbine 5 to the inducer pump 4 and forming a turbo-pump. A flow guide 7 is provided upstream of the inducer pump 4 within the remote inlet tube 1 and around the inlet opening 2 an air and vapour escape path 8 is provided to disperse at least some of the air and vapour released by the fuel due to the pressure drop across the inlet opening 2. An enclosure 9 surrounds the pelton wheel turbine 5. Pressurized fuel from the booster pump is supplied the pelton wheel turbine 5 along a pipe 10 having a constrictive orifice 11 which directs a jet of high pressure fuel onto the pelton wheel turbine 5 and thus provides the motive force to drive the inducer 4.

The enclosure 9 is substantially sealed but in order to allow the incoming fuel to escape a plurality of fuel vent holes 12 are provided. All of the fuel vent holes 12 are situated below the level of the pelton wheel turbine 5. The fuel vent holes 12 allow the fuel pressure within the enclosure 9 and fuel pressure within the fuel tank as a whole to equalise by the out flow of fuel from the enclosure 9 into the fuel tank.

At the top of the enclosure 9 is an air inlet 13 to which air is supplied from a liquid ring pump (not shown) associated with the booster pump. As explained above the liquid ring pump produces a supply of air. This air is supplied to the enclosure 9 so that the upper portion of the enclosure 9 including the pelton wheel turbine 5 is filled with air, as a result the pelton wheel turbine 5 is not flooded and so operates with a relatively high efficiency.

Further air may also be generated by the drop in pressure when the fuel from the pipe 10 exits through the orifice 11 causing dissolved air to be released from the fuel. However the liquid ring pump is the more reliable and primary source of air.

The air will escape through the fuel vent holes 12 when enough air has been supplied to the enclosure 9 to drive the level of fuel within the chamber down to the level of the fuel vent holes 12.

Because the air supplied to the enclosure 9 from the liquid ring pump is pressurized it is able to drive the fluid level in the enclosure 9 below the level of the pelton wheel turbine even when the fuel level within the fuel tank is several feet above the position of the pelton wheel turbine 5.

The air from the liquid ring pump is provided in the form of a high foam of fuel and air, but this rapidly breaks down and separates into air and fuel. The fact that the unflooded pelton wheel is running in a high foam rather than pure air has little effect on its efficiency, but if necessary a separator could be provided between the liquid ring pump and the pelton wheel in order to provide a flow of pure air to the pelton wheel chamber.

Although this invention has been described in terms of a pelton wheel turbine powering an inducer at the end of the pump remote inlet tube it would of course be possible to use such a system in conjunction with a pelton wheel turbine used for any purpose beneath the fuel level in a fuel tank.

## Claims

1. A pelton wheel turbine (5) immersed in fuel and characterised by the turbine being surrounded by an enclosure (9) containing gas such that the pelton wheel turbine is unflooded, the gas being supplied from a pump which extracts it from the fuel.

2. A pelton wheel turbine as claimed in claim 1 and further characterised in that the pump is a liquid ring pump.

3. A pelton wheel turbine as claimed in claim 1 or claim 2 further characterised in that the gas is air.

4. A pelton wheel turbine as claimed in any preceding claim and further characterised in that the pelton wheel turbine drives an inducer (4) at the end of a remote fuel inlet (1) tube in a fuel tank and is situated below the level of fuel in the tank and the pump is supplied with fuel by the remote fuel inlet tube.
